# EUROPÄISCHE PATENTSCHRIFT

(11) **EP 1 129 985 B1**
(45) Veröffentlichungstag und Bekanntmachung des Hinweises auf die Patenterteilung: **28.08.2002**
(21) Anmeldenummer: 00127573.4
(22) Anmeldetag: 15.12.2000
(51) Int. Cl.: B67C 3/24, B65G 17/32, B67C 7/00

(54) **Vorrichtung zum Befüllen von in länglichen plattenförmigen Greiffern gehaltenen Behältern**
Device for filling containers supported by elongated platelike grippers
Dispositif de remplissage de récipients tenus par des pinces formées de plaques allongées

(30) Priorität: 25.02.2000 DE 10008876
(43) Veröffentlichungstag der Anmeldung: 05.09.2001
(73) Patentinhaber: SIG HAMBA Filltec GmbH & Co. KG, 66539 Neunkirchen/Saar (DE)
(72) Erfinder: Reinecke, Günter, 42653 Solingen (DE)
(74) Vertreter: Patentanwälte Ostriga & Sonnet

(56) Entgegenhaltungen:
- DE-A- 19 642 987
- DE-A- 19 702 770
- US-A- 3 288 271

## Beschreibung

Die Erfindung betrifft eine Vorrichtung zum Befüllen von Flaschen und anderen Behältern mit Nahrungs- und Genußmitteln, wie mit dünnflüssigen bis pasteusen Molkerei- und Fettprodukten, Säften, Wässern od. dgl. entsprechend dem Oberbegriff des Anspruchs 1. Eine als Flaschenfüllwerk ausgebildete Vorrichtung dieser Gattung ist u.a. in der DE 196 42 987 A1 beschrieben.

Die in der DE 196 42 987 A1 beschriebene Vorrichtung besitzt etwa korbartig ausgebildete Behälteraufnahmen, welche orthogonal zur Bewegungsrichtung eines endlos umlaufend geführten Fördermittels außen auf letzterem angebracht sind. Dabei ist die Anordnung so getroffen, dass die zu sterilisierende, zu füllenden, und zu verschließenden Flaschen, im vorliegenden Falle PET-Flaschen, das Obertrum des Fördermittels in mehreren Bahnen durchlaufen. Die korbartige Ausbildung der Behälteraufnahmen bedingt eine relativ aufwendige Bauweise und gestattet im übrigen nur die Verwendung von Flaschen eines bestimmten Volumens und eines bestimmten maximalen Durchmessers.

Eine andere Vorrichtung ist in der DE 37 16 096 C2 beschrieben. Bei jener bekannten Vorrichtung sind die für Becher bestimmten Behälteraufnahmen von Aussparungen gebildet, die in länglichen Platten, sogenannten Zellenbrettern, vorgesehen sind, welche außenseitig zweier endlos umlaufend geführter, von Laschenketten gebildeter Fördermittel gehalten sind und von letzteren mitgeführt werden.

Ausgehend vom Gegenstand der DE 196 42 987 A1, liegt der Erfindung die Aufgabe zugrunde, eine Vorrichtung zu entwickeln, die zur Verarbeitung unterschiedlicher Behälter, insbesondere auch für die Verarbeitung unterschiedlicher Flaschen, geeignet ist.

Entsprechend der Erfindung wird diese Aufgabe dadurch gelöst, dass die Trageelemente längliche Platten sind, die Aussparungen aufweisen, welche die Behälteraufnahmen bilden, wobei jede Platte durch eine im wesentlichen quer zur Förderrichtung angeordnete, die Behälteraufnahme teilende Trennfuge in zwei komplementäre Teilplatten aufgeteilt ist, die bezüglich der Förderrichtung im Abstand und unabhängig voneinander am Fördermittel befestigt sind, wobei die Behälter bei an einem Umlenkbereich des Fördermittels infolge Winkelstellung zueinander der beiden jeweiligen komplementären Teilplatten geöffneter Trennfuge den Behälteraufnahmen zugeführt oder aus letzteren entnommen und bei geradlinig gestrecktem Fördermittel bei zugleich geschlossener Trennfuge in den Behälteraufnahmen gehalten werden.

Die Besonderheit der Erfindung besteht in der Längsteilung einer jeden länglichen Platte in zwei komplementäre Teilplatten mit einer zugleich die Behälteraufnahmen teilenden Trennfuge.

Die miteinander korrespondierenden komplementären Teilplatten sind jeweils unabhängig voneinander außenseitig auf dem endlos umlaufend geführten Fördermittel gehalten. Dabei nutzt die Erfindung den Effekt, dass jeweils zwei korrespondierende komplementäre Teilplatten beim Durchlaufen eines Umlenkbereichs, beispielsweise eines Kettensterns, bezüglich des Umlenkbereichs unterschiedliche sekantiale Positionen, d.h. eine Winkelstellung zueinander, einnehmen, was mit einer geöffneten Trennfuge und mit zugleich geöffneten Behälteraufnahmen einhergeht. In diese zeitweilig geöffneten Behälteraufnahmen werden sodann die Haltebereiche der Behälter eingeführt.

Die Entnahme der Behälter erfolgt, verglichen mit der vorbeschriebenen Behälter-Zuführung, in analog umgekehrter Weise an dem bezüglich der Förderrichtung stromabwärts folgenden Umlenkbereich.

Dabei ist es grundsätzlich unkritisch, wie die Haltebereiche der Behälter gestaltet sind. Ein solcher Haltebereich kann z.B. vom Flansch eines zylindrischen oder konischen Behälters oder von einem Hinterschneidungsbereich einer Flasche gebildet sein.

Die erfindungsgemäße Vorrichtung ist besonders für die Verwendung von Flaschen geeignet. Da eine Vielzahl von Flaschentypen zumindest ähnlich geformte Mündungsbereiche mit denselben Abmessungen aufweist, gestattet die Erfindung die Verwendung unterschiedlichster Flaschentypen abweichender Außenformen und Volumina.

Eine besonders große Öffnungsweite der Trennfuge zwischen zwei komplementären Teilplatten, während diese den Umlenkbereich passieren, wird erfindungsgemäß durch Befestigungsmittel erzielt, welche jede Teilplatte von der Außenseite des Fördermittels distanzieren und an dessen jeweiligem Umlenkbereich tangential zu letzterem ausgerichtet halten.

Im einzelnen können die Befestigungsmittel so ausgebildet sein, dass die Teilplatten mittels bezüglich des Umlenkbereichs radial angeordneter Laschen am Fördermittel befestigt sind.

Als zweckmäßig haben sich in weiterer Ausgestaltung der Erfindung Behälteraufnahmen erwiesen, die von kreisförmigen Aussparungen gebildet sind, welche jeweils aus zwei zueinander offenen halbkreisförmigen Aussparungen der komplementären Teilplatten zusammengesetzt sind. Ansonsten lässt die Erfindung unterschiedlichst geformte Umfangskonturen der Behälteraufnahmen-Aussparungen, in Anpassung an die Umfangskontur des verwendeten Behälter-Typs, zu.

Eine einfache Fertigungsmöglichkeit von Teilplatten ist mit weiterer Ausgestaltung der Erfindung dadurch gegeben, dass die Trennfuge in einer Spiegelsymmetrieebene zwischen zwei komplementären Teilplatten angeordnet ist.

Zur Zuführung der Behälter ist erfindungsgemäß benachbart eines Umlenkbereichs eine Schwenkkonsole mit einer zur Umlenkachse des Umlenkbereichs parallelen Schwenkachse angeordnet, wobei mittels der Schwenkkonsole der jeweilige Haltebereich der Behälter in die geöffnete Trennfuge eingeführt und mit sich fortsetzender Schwenkbewegung solange in der Trennfuge gehalten wird, bis letztere geschlossen ist.

Entsprechend einer Variante der Erfindung bildet die Schwenkkonsole eine Winkelkonsole mit einer sekantial bezüglich der Schwenkachse angeordneten Behälter-Aufstandsfläche und mit einer sich parallel zum Schwenkradius erstreckenden Behälter-Stützfläche.

Eine besonders zweckmäßige Anordnung der Behälter-Zuführung und der Behälter-Entnahme besteht in weiterer Ausgestaltung der Erfindung darin, dass bei einem mindestens drei, vorzugsweise vier, Umlenkbereiche sowie ein Untertrum aufweisenden Fördermittel die Zuführung der Behälter zu den Behälteraufnahmen an dem bezüglich der Förderrichtung stromaufwärts angeordneten Umlenkbereich und die Entnahme der Behälter an dem stromabwärts angeordneten Umlenkbereich jeweils am Untertrum an der Außenseite des Fördermittels erfolgt.

In den Zeichnungen ist ein bevorzugtes Ausführungsbeispiel entsprechend der Erfindung dargestellt, es zeigt
Fig. 1 eine schematische Seitenansicht einer Vorrichtung zum Befüllen von Behältern, beim gezeigten Ausführungsbeispiel von Flaschen,
Fig. 2-7 etwa entsprechend dem in Fig. 1 mit II-VII bezeichneten eingekreisten Detail in schematischer Darstellung eine Behälter-Zuführstation in ihren verschiedenen Arbeitsphasen,
Fig. 8 ein vergrößertes Detail etwa entsprechend der mit VIII bezeichneten Einkreisung in Fig. 7 und
Fig. 9 eine teilweise Draufsicht auf eine Folge von länglichen Platten, etwa entsprechend der in Fig. 4 mit IX bezeichneten Blickrichtung.

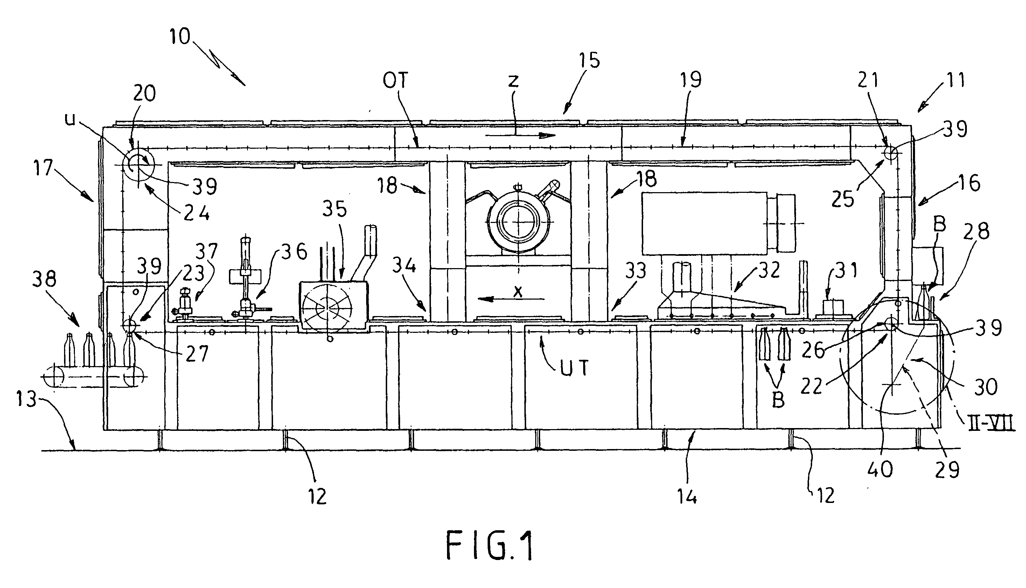

In Fig. 1 ist eine Vorrichtung zum Befüllen von Behältern B, beim gezeigten Anwendungsbeispiel von Flaschen, insgesamt mit der Bezugsziffer 10 bezeichnet. Das Gehäuse 11 der Vorrichtung 10 ist über Stützfüße 12 auf einer Gebäudeaufstellfläche 13 aufgeständert.

Das Gehäuse 11 ist im wesentlichen rahmenförmig ausgebildet und weist demnach einen unteren Rahmenschenkel 14, einen oberen Rahmenschenkel 15 sowie unteren und oberen Rahmenschenkel miteinander verbindende Rahmenstege 16, 17 auf. Der obere Rahmenschenkel 15 stützt sich mit seinem mittleren Bereich über ein Stützportal 18 auf dem unteren Rahmenschenkel 14 ab.

Durch den Rahmen des Gehäuses 11 ist ein Fördermittel 19 (Zugmittel) endlos umlaufend über etwa an den Rahmenenden angeordnete Umlenkbereiche 20, 21, 22, 23 geführt. Zwischen den Umlenkbereichen 20, 21 erstreckt sich das Obertrum OT und zwischen den Umlenkbereichen 22, 23 das Untertrum UT des Fördermittels 19.

Das Fördermittel 19 kann von beliebiger zweckmäßiger Art z.B. als Kette, als Seil oder Zahnriemen ausgebildet sein. Beim gezeigten Ausführungsbeispiel ist das Fördermittel 19 von zwei Laschenketten gebildet. Das Fördermittel 19 ist demnach paarig vorhanden, besteht beim Ausführungsbeispiel also aus zwei in Förderrichtung x verlaufenden Einzelketten.

Der Antrieb des Fördermittels 19 erfolgt über das im Umlenkbereich 20 enthaltene Kettenantriebsrad 24 in Drehrichtung U, während in den anderen Umlenkbereichen 21, 22, 23 jeweils nur antriebslose mitlaufende Kettenumlenkräder 25, 26, 27 vorhanden sind. Demgemäß sind die Fördermittel-Rücklaufrichtung mit z und die Förderrichtung des Fördermittels mit x bezeichnet. Die Achsen (Umlenkachsen) der Umlenkbereiche 20-23 bzw. der Umlenkräder 24-27 tragen einheitlich jeweils die Bezugsziffer 39.

Außen am Umlenkbereich 22 werden die zu befüllenden Behälter B, und zwar im vorliegenden Fall PET-Flaschen, über eine Behälter-Aufgabevorrichtung 28 herangeführt und schließlich mittels einer eine Schwenkkonsole 29 aufweisenden Behälter-Zuführstation 30 in der im folgenden noch eingehend zu beschreibenden Weise länglichen Platten 41, und zwar langrechteckigen Platten 41, zugeführt, so dass die Behälter B mittelbar über die Platten 41 im Untertrum UT des Fördermittels, an letzterem hängend, eine Behandlungsstrecke durchlaufen können. Die Platten 41 sind mit ihren Längsachsen L quer zur Förderrichtung x angeordnet.

Zu der dem Untertrum UT zugeordneten Behandlungsstrecke gehören, entsprechend dem Förderstrom in Richtung x hintereinander genannt, folgende Arbeitsstationen: stromabwärts hinter der Behälter-Zuführstation 30 eine Sensorstation 31 zum Auffinden von nicht mit Behältern B besetzten Behälteraufnahmen A, 32 eine Sterilmittel-Station, 33 eine erste Füllstation zur Zuführung eines ersten Produkts, der Produktunterlage, in die Behälter B, 34 eine zweite Füllstation zur Zuführung eines zweiten Produkts in die Behälter B, 35 eine Deckelentkeimungs- und zugleich Deckelzuführstation, 36 eine Deckel-Siegelstation, 37 eine Deckel-Bördelstation und 38 eine Behälter-Entnahmestation.

Zur Zuführung der Behälter B ist benachbart des Umlenkbereichs 22 die bereits erwähnte Behälter-Zuführstation 30 mit der Schwenkkonsole 29 vorgesehen, die eine zur Umlenkachse 39 des Umlenkbereichs 22 bzw. des Ketten-Umlenkrades 26 parallele Schwenkachse 40 aufweist.

Außen am Fördermittel 19 sind, quer zur Förderrichtung x angeordnet, die länglichen Platten 41 vorgesehen, welche jeweils aus zwei einander komplementären Teilplatten 42, 43 bestehen, die durch eine Trennfuge T geteilt sind, welche zugleich die aus Aussparungen bestehenden Behälteraufnahmen A teilt. Die Behälteraufnahmen A setzen sich jeweils aus zwei zueinander offenen halbkreisförmigen Aussparungen 48, 49 zusammen.

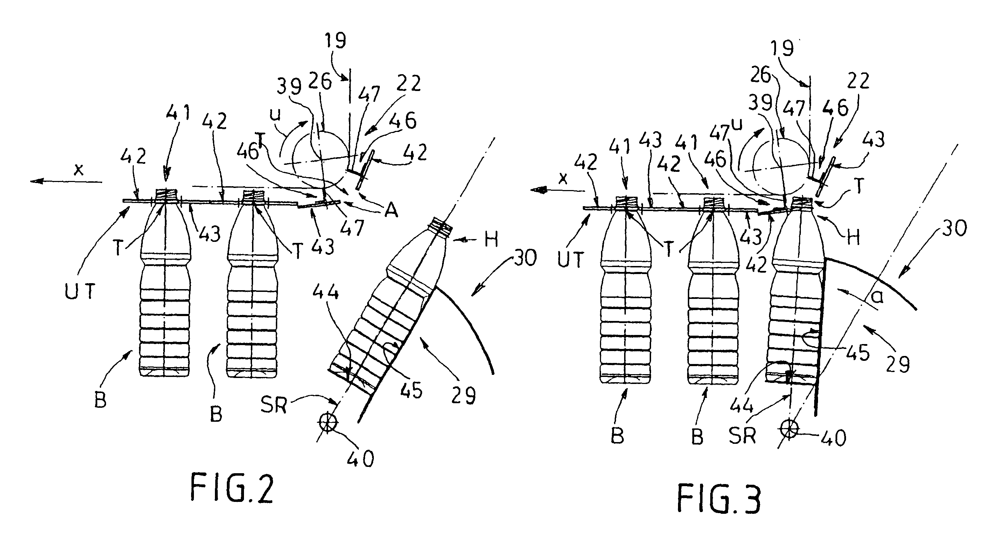

Aus Fig. 2 wird deutlich, dass sich die Fuge T beim Passieren des Umlenkbereichs 22 infolge der Winkelstellung zueinander der beiden korrespondierenden komplementären Teilplatten 42, 43 geöffnet hat, so dass der Haltebereich H des Behälters B in die Behälteraufnahme A eingeführt werden kann, wie Fig. 3 zu entnehmen ist.

Die Schwenkkonsole 29 stellt eine Winkelkonsole mit einer etwa sekantial bezüglich der Schwenkachse 40 angeordneten Behälter-Aufstandsfläche 44 und mit einer sich etwa parallel zum zugeordneten Schwenkradius SR erstreckenden Behälter-Stützfläche 45 dar.

Beim Übergang von der in Fig. 2 dargestellten Arbeitsposition zur Arbeitsposition gemäß Fig. 3 ist die Schwenkkonsole 29 in Schwenkrichtung a vorgeschwenkt worden.

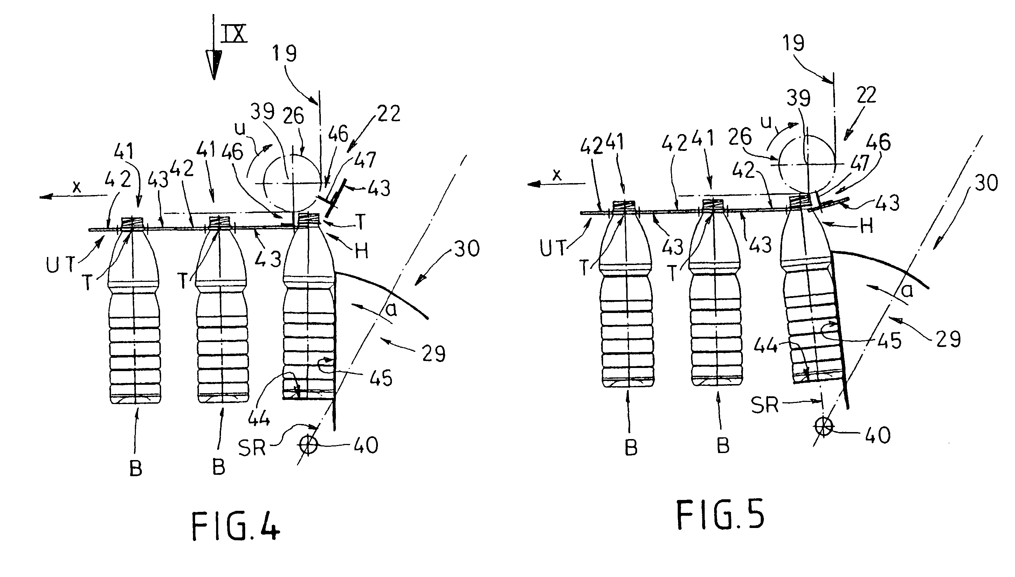

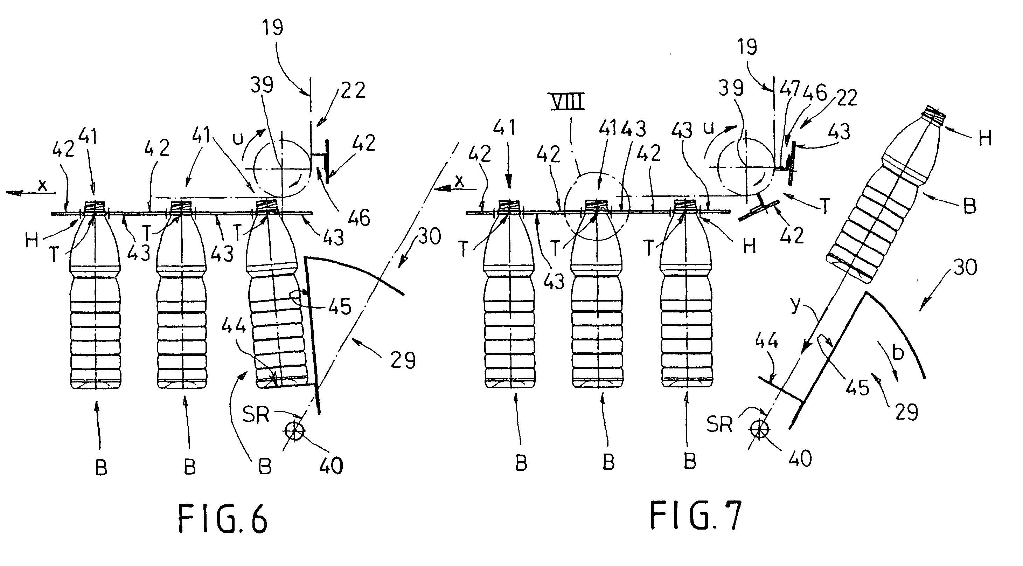

Diese Schwenkbewegung in Richtung a wird als Mitführbewegung so lange fortgeführt, bis sich entsprechend den Zwischenpositionen gemäß den Fig. 4, 5 und 6 die Trennfuge T, und damit die Behälteraufnahme A, entgültig geschlossen hat, so dass der jeweilige Behälter B gemäß Fig. 7 sicher in der jeweiligen Behälteraufnahme A hängt.

Im übrigen zeigt Fig. 7, dass die Schwenkkonsole 29 in der entgegengesetzten Schwenkrichtung b zurückgeschwenkt ist, so dass erneut Behälter B entlang der Zuförderrichtung y von oben her entlang der Behälter-Stützfläche 45 zur Behälter-Aufstandsfläche 44 hin gefördert werden können.

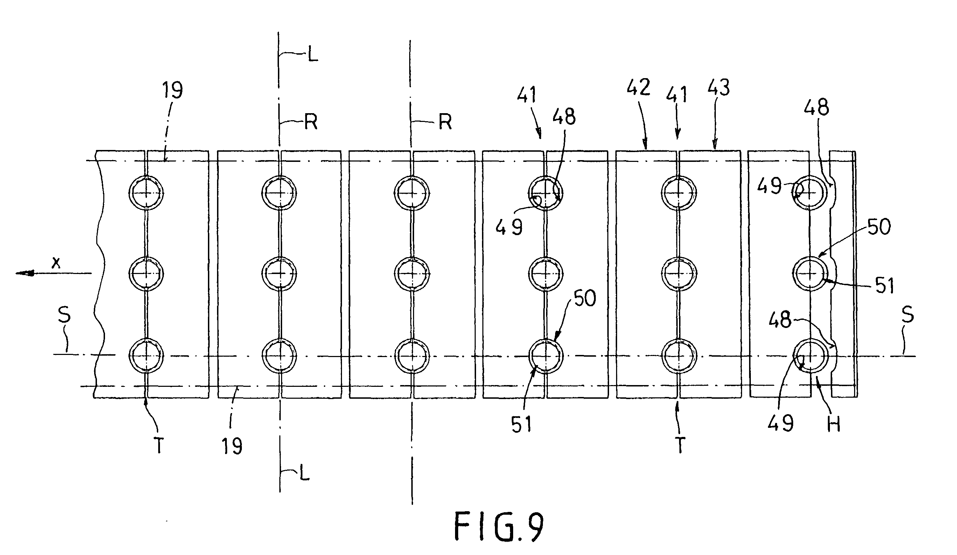

Da es sich im vorliegenden Fall (vgl. Fig. 9) um eine dreibahnige Vorrichtung 10 handelt, wird immer eine drei Behälter B enthaltende Behälterreihe R der Schwenkkonsole 29 zugeführt und es werden immer drei Behälter B mit ihren Haltebereichen H zugleich in die Behälteraufnahmen A eingeführt.

In Fig. 9 sind die von den Aufnahmen A gebildeten Bahnen mit S und die Reihen mit R bezeichnet.

Nachdem die Behälter B die einzelnen Arbeitsstationen des Untertrums UT durchlaufen haben, werden die gefüllten und mit umgebörtelten Deckeln versehenen Behälter B mittels der im wesentlichen ein Kurzförderband darstellenden Behälter-Entnahmestation 38 am Umlenkbereich 23 entnommen, da sich an dem Umlenkbereich 23 die Trennfugen T mit den Behälteraufnahmen A analog zur Darstellung gemäß Fig. 2 geöffnet und so die Haltebereiche H der Behälter B freigegeben haben.

Die Trennfugen T öffnen sich also in den Umlenkbereichen, z.B. bei 22 und 23 und schließen sich, sobald sie bei Förderrichtung x in die gerade gestreckte Anordnung des Fördermittels 19 und der Platten 41 übergehen, wobei letzteres z.B. eingangs des Untertrums UT der Fall ist.

Um die Öffnungsweite der Trennfuge T an den Umlenkbereichen 22, 23 zu vergrößern, sind die bezüglich der Förderrichtung x im Abstand und unabhängig voneinander am Fördermittel 19 befestigten komplementären Teilplatten 42, 43 von der Außenseite des Fördermittels 19 distanziert. Dies geschieht im einzelnen mittels der in den Fig. 2 und 3 dargestellten Winkellaschen 46, welche radial zu den Umlenkbereichen 22, 23 angeordnete Distanzstege 47 bilden.

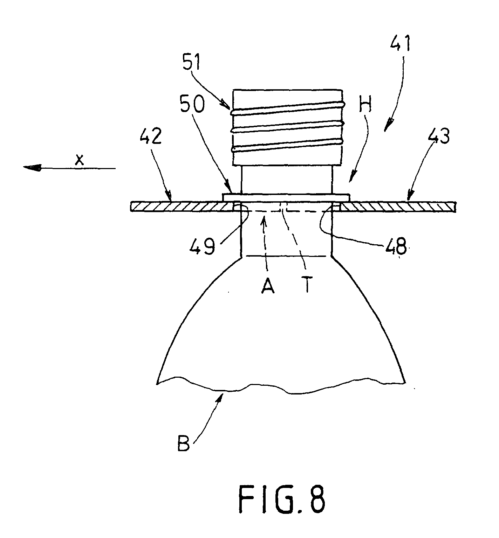

In den Fig. 8 und 9 ist zu erkennen, wie sich PET-Flaschen B mit dem unterhalb ihrer Außengewinde-Mündung 51 angeordneten Halteflansch 50 oben auf den die Behälteraufnahmen A bildenden Teilplatten 42, 43 abstützen.

## Patentansprüche

1. Vorrichtung (10) zum Befüllen von Flaschen und anderen Behältern (B) mit Nahrungs- und Genußmitteln, wie mit dünnflüssigen bis pasteusen Molkerei- und Fettprodukten, Säften, Wässern od. dgl., mit mindestens einem über Umlenkbereiche (20-23), insbesondere über Umlenkräder (24-27), endlos umlaufend geführten Fördermittel (19), welches an seiner Außenseite mit ihren Längsachsen (L) quer zur Förderrichtung (x) angeordnete Zellenplatten (41) aufweist, welche jeweils eine quer zur Förderrichtung (x) angeordnete Reihe (R) von Behälteraufnahmen (A) aufweisen, die zudem in Förderrichtung (x) angeordnete Bahnen (S) bilden und die mit ihnen ausgerichtete Arbeitsstationen (30-38), wie eine Behälter-Zuführstation (30), eine Produkt-Füllstation (33, 34), eine Deckel-Auflegestation (35), eine Deckel-Verschließstation (36) sowie eine Behälter-Entnahmestation (38), nacheinander durchlaufen, **dadurch gekennzeichnet, dass** die Tragelemente längliche Platten (41) sind, die Aussparungen (48, 49) aufweisen, welche die Behälteraufnahmen (A) bilden, wobei jede Platte (41) durch eine im wesentlichen quer zur Förderrichtung (x) angeordnete, die Behälteraufnahmen (A) teilende Trennfuge (T) in zwei komplementäre Teilplatten (42-43) aufgeteilt ist, die bezüglich der Förderrichtung (x) im Abstand und unabhängig voneinander am Fördermittel (19) befestigt sind, wobei die Behälter (B) bei an einem Umlenkbereich (22) des Fördermittels (19) infolge Winkelstellung zueinander der beiden jeweiligen komplementären Teilplatten (42, 43) geöffneter Trennfuge (T) den Behälteraufnahmen (A) zugeführt oder aus letzteren entnommen und bei geradlinig gestrecktem Fördermittel (19) bei zugleich geschlossener Trennfuge (T) in den Behälteraufnahmen (A) gehalten werden.

2. Vorrichtung zum Befüllen von Flaschen nach Anspruch 1, **gekennzeichnet durch** Befestigungsmittel (46), welche jede Teilplatte (42, 43) von der Außenseite des Fördermittels (19) distanzieren und an dessen jeweiligem Umlenkbereich (z.B. 22, 23) tangential zu letzterem ausgerichtet halten.

3. Vorrichtung zum Befüllen von Flaschen nach Anspruch 2, **dadurch gekennzeichnet, dass** die Teilplatten (42, 43) mittels bezüglich des Umlenkbereichs (z.B. 22, 23) radial angeordneter Laschen (bei 47) am Fördermittel (19) befestigt sind.

4. Vorrichtung zum Befüllen von Flaschen nach einem der Ansprüche 1 bis 3, **dadurch gekennzeichnet, dass** die Behälteraufnahmen (A) von kreisförmigen Aussparungen (48, 49) gebildet sind, welche jeweils aus zwei zueinander offenen halbkreisförmigen Aussparungen (42; 43) der komplementären Teilplatten (42, 43) zusammengesetzt sind.

5. Vorrichtung zum Befüllen von Flaschen nach einem der Ansprüche 1 bis 4, **dadurch gekennzeichnet, dass** die Trennfuge (T) in einer Spiegelsymmetrieebene zwischen zwei komplementären Teilplatten (42, 43) angeordnet ist.

6. Vorrichtung zum Befüllen von Flaschen nach einem der Ansprüche 1 bis 5, **dadurch gekennzeichnet, dass** zur Zuführung der Behälter (B) benachbart eines Umlenkbereichs (22) eine Schwenkkonsole (29) mit einer zur Umlenkachse (39) des Umlenkbereichs (22) parallelen Schwenkachse (40) angeordnet ist, wobei mittels der Schwenkkonsole (29) der jeweilige Haltebereich (H) der Behälter (B) in die geöffnete Trennfuge (T) eingeführt und mit sich fortsetzender Schwenkbewegung (bei a) so lange in der Trennfuge (T) gehalten wird, bis letztere geschlossen ist.

7. Vorrichtung zum Befüllen von Flaschen nach Anspruch 6, **dadurch gekennzeichnet, dass** die Schwenkkonsole (29) eine Winkelkonsole mit einer sekantial bezüglich der Schwenkachse (40) angeordneten Behälter-Aufstandsfläche (44) und mit einer sich parallel zum Schwenkradius (SR) erstreckenden Behälter-Stützfläche (45) bildet.

8. Vorrichtung zum Befüllen von Flaschen nach einem der Ansprüche 1 bis 7, **dadurch gekennzeichnet, dass** bei einem mindestens drei, vorzugsweise vier, Umlenkbereiche (20-23) sowie ein Untertrum (U) aufweisenden Fördermittel (19) die Zuführung der Behälter (B) zu den Behälteraufnahmen (A) an dem bezüglich der Förderrichtung (x) stromaufwärts angeordneten Umlenkbereich (22) und die Entnahme der Behälter (B) an dem stromabwärts angeordneten Umlenkbereich (23) jeweils am Untertrum (U) an der Außenseite des Fördermittels (19) erfolgt.

## Revendications

1. Dispositif (10) pour remplir des bouteilles et d'autres récipients (B) avec des produits alimentaires et des denrées de luxe, tels que des produits laitiers et des produits gras, des sirops ou jus, des eaux ou analogues, à grande fluidité jusqu'à pâteux, avec au moins un moyen de convoyage (19) guidé en circulation continue, sur des zones de renvoi (20 à 23), en particulier sur des roues de renvoi (24 à 27), moyen de convoyage présentant, sur sa face extérieure, des plaques cellulaires (41) disposées avec leurs axes longitudinaux (L) orientés transversalement par rapport à la direction de convoyage (x), qui ont chaque fois au moins une rangée (R) de logements à récipients (A), disposée transversalement par rapport à la direction de convoyage (x), qui forment en plus des pistes (S) disposées dans la direction de transport (x) et qui passent l'une après l'autre par les postes de travail (30 à 38) orientés dans leur direction, tel qu'un poste d'amenée de récipients (30), un poste de remplissage en produit (33, 34), un poste de pose de couvercles (35), un poste de fermeture de couvercles (36) ainsi qu'un poste de prélèvement de récipients (38), **caractérisé en ce que** les éléments porteurs sont des plaques (41) allongées, présentant des évidements (48, 49), formant les logements à récipients (A), chaque plaque (41) étant subdivisée au moyen d'un joint de séparation (T) divisant les logements à récipients (A), disposé sensiblement transversalement par rapport à la direction de transport (x), en formant deux plaques partielles (42, 43) complémentaires, qui sont fixées, par rapport à la direction de transport (x) à distance et indépendamment les unes des autres sur le moyen de transport (19), les récipients (B), lorsque le joint de séparation (T) est ouvert, au passage d'une zone de renvoi (22) du moyen de transport (19), par suite d'une position angulaire mutuelle des deux plaques partielles (42, 43) chaque fois complémentaires, étant amenés aux logements à récipients (A) ou prélevés de ces derniers et, lorsque le moyen de transport (19) est étiré de façon rectiligne, étant maintenus dans les logements à récipients (A) alors que le joint de séparation (T) est simultanément fermé.

2. Dispositif de remplissage de bouteilles selon la revendication 1, **caractérisé par** des moyens de fixation (46), écartant chaque plaque partielle (42, 43) vis-à-vis de la face extérieure de moyen de transport (19), et sur sa zone de renvoi respective (par exemple 22, 23), la maintenant tangentiellement par rapport à cette dernière.

3. Dispositif de remplissage de bouteilles selon la revendication 2, **caractérisé en ce que** les plaques partielles (42, 43) sont fixées (en 47) sur le moyen de transport (19), au moyen de pattes disposées radialement par rapport à la zone de renvoi (par exemple 22, 23).

4. Dispositif de remplissage de bouteilles selon l'une. des revendications 1 à 3, **caractérisé en ce que** les logements à récipients (A) sont formés par des évidements (48, 49) circulaires, composés chacun de deux évidements (42; 43) en forme de demi-cercle, ouverts l'un vers l'autre, des plaques (42, 43) complémentaires.

5. Dispositif de remplissage de bouteilles selon l'une des revendications 1 à 4, **caractérisé en ce que** le joint de séparation (T) est disposé dans un plan de symétrie spéculaire entre deux plaques partielles (42, 43) complémentaires.

6. Dispositif de remplissage de bouteilles selon l'une des revendications 1 à 5, **caractérisé en ce que**, pour l'amenée des récipients (B) au voisinage d'une zone de renvoi (22), une console pivotante (29) est disposée avec un axe de pivotement (40) parallèle à l'axe de renvoi (39) de la zone de renvoi (22), sachant que, au moyen de la console pivotante (29), la zone de maintien (H) respective des récipients (B) est introduite dans le joint de séparation (T) ouvert et est maintenue, par la continuation du déplacement de pivotement (en a), dans le joint de séparation (T), jusqu'à ce que ce dernier soit fermé.

7. Dispositif de remplissage de bouteilles selon la revendication 6, **caractérisé en ce que** la console pivotante (29) forme une console en cornière avec une surface de pose de récipient (44) disposée en sécante par rapport à l'axe de pivotement (40) et avec une face d'appui de récipient (45) s'étendant parallèlement au rayon de pivotement (SR).

8. Dispositif de remplissage de bouteilles selon l'une des. revendications 1 à 7, **caractérisé en ce que** dans le cas d'un moyen de transport (19) présentant au moins trois, de préférence quatre zones de renvoi (20 à 23) ainsi qu'un brin inférieur (U), l'amenée des récipients (B) aux logements à récipients (A) s'effectue sur la zone de renvoi (22), disposée en amont par rapport à la direction de transport (x), et le prélèvement des récipients (B) s'effectue sur la zone de renvoi (23) disposée en aval, chaque fois sur le brin inférieur (U) sur la face extérieure du moyen de transport (19).

## Claims

1. Device (10) for filling bottles and other containers (B) with foods and delicacies, such as highly fluid-to-pasty dairy and fatty products, juices, waters or the like, the said device having at least one conveyer means (19) which is guided over deflecting regions (20-23), particularly over deflecting wheels (24-27), in a continuously revolving manner and which has, on its outer side, cell-type plates (41) which are disposed with their longitudinal axes (L) transverse to the direction of conveyance (x) and each have a row (R), which is disposed transversely to the said direction of conveyance (x), of container receptacles (A), which additionally form tracks (S) disposed in the said direction of conveyance (x) and which run successively through working stations (30-38) which are aligned with them, such as a container infeed station (30), a product-filling station (33, 34), a lid-applying station (35), a lid-sealing station (36) and a container removal station (38), **characterised in that** the carrying elements are elongated plates (41) which have clearances (48, 49) which form the container receptacles (A), each plate (41) being divided up, by a separating gap (T) which is disposed substantially transversely to the direction of conveyance (x) and divides the container receptacles (A), into two complementary partial plates (42-43) which are fastened to the conveyer means (19) at a distance from one another with respect to the direction of conveyance (x) and independently of one another, and the containers (B) being fed to, or removed from, the container receptacles (A) when the separating gap (T) is opened at a deflecting region (22) of the conveyer means (19) as a result of the angular position of the particular two complementary partial plates (42, 43) in relation to one another, and being held in the container receptacles (A) when the conveyer means (19) is stretched out in a straight line with the separating gap (T) closed at the same time.

2. Device for filling bottles according to claim 1, **characterised by** fastening means (46) which distance each partial plate (42, 43) from the outer side of the conveyer means (19) and keep it orientated tangentially to the said conveyer means at the particular deflecting region (for example 22, 23) of the latter.

3. Device for filling bottles according to claim 2, **characterised in that** the partial plates (42, 43) are fastened to the conveyer means (19) by means of flaps which are disposed (at 47) radially with respect to the deflecting region (for example 22, 23).

4. Device for filling bottles according to one of claims 1 to 3, **characterised in that** the container receptacles (A) are formed by circular clearances (48, 49) which are made up, in each case, of two semicircular clearances (42; 43) in the complementary partial plates (42, 43), which clearances are open towards each other.

5. Device for filling bottles according to one of claims 1 to 4, **characterised in that** the separating gap (T) is disposed in a plane of specular symmetry between two complementary partial plates (42, 43).

6. Device for filling bottles according to one of claims 1 to 5, **characterised in that** a pivoting bracket (29) with an axis of pivoting (40) parallel to the axis of deflection (39) of the deflecting region (22) is disposed adjacent to a deflecting region (22) for the purpose of feeding in the containers (B), the particular holding region (H) of the containers (B) being introduced into the open separating gap (T) by means of the pivoting bracket (29) and being held, as the pivoting movement (at a) continues, in the said separating gap (T) until the latter is closed.

7. Device for filling bottles according to claim 6, **characterised in that** the pivoting bracket (29) forms an angle bracket with a stand-on face (44) for the containers which is disposed secantially with respect to the axis of pivoting (40), and with a supporting face (45) for the containers which extends parallel to the radius of pivoting (SR).

8. Device for filling bottles according to one of claims 1 to 7, **characterised in that**, in the case of a conveyer means (19) having at least three, preferably four, deflecting regions (20-23) and a lower strand (U), the feeding of the containers (B) to the container receptacles (A) takes place at the deflecting region (22) which is disposed upstream with respect to the direction of conveyance (x), and the removal of the containers (B) at the deflecting region (23) which is disposed downstream, in each case on the lower strand (U) on the outer side of the conveyer means (19).
